# EUROPEAN PATENT APPLICATION

(11) **EP 3 493 380 A1**
(43) Date of publication of application: **05.06.2019**
(21) Application number: 18201114.8
(22) Date of filing: 18.10.2018
(51) Int. Cl.: H02M 1/15, H02M 3/158

(54) **DC-DC CONVERTER**

(30) Priority: 01.12.2017 KR 20170164333
(71) Applicant: Korea Aerospace Research Institute, Daejeon 34133 (KR)
(72) Inventor: CHOI, Jae-dong, 34133 Daejeon (KR); JANG, Jing Baek, 34140 Daejeon (KR); LEE, Nayoung, 34133 Daejeon (KR); LEE, Sang-ryool, 34133 Daejeon (KR); PARK, Jeong Eon, 34133 Daejeon (KR)
(74) Representative: Patentanwälte Ruff, Wilhelm, Beier, Dauster & Partner mbB

(57) **Abstract**

Provided is a DC-DC converter. A DC-DC converter includes a first transformer connected between a first node and a ground, the first node being located between an input terminal and an output terminal, and the first transformer comprising a first inductor and a second inductor magnetically coupled to each other, a first switch serially connected to the first inductor, between the first node and the ground, a second switch serially connected to the second inductor, between the first node and the ground, a third switch connected between a second node and the output terminal, the second node being located between the second inductor and the second switch, and the third switch being controlled in a same manner as the first switch, and a fourth switch connected between a third node and the output terminal, the third node being located between the first inductor and the first switch, and the fourth switch being controlled in a same manner as the second switch.

## Description

The invention relates to a DC-DC converter.

Power control units (PCUs) of geosynchronous earth orbit (GEO) satellites may include non-isolated DC-DC converters that receive power from a solar array and charge a battery.

An output current ripple may be generated in an output of the DC-DC converter. To reduce the output current ripple, a bus capacitor having a relatively large capacity and a relatively long life may be connected to the output of the DC-DC converter. However, a capacitor having a large size may be burdensome in terms of weight, size, and performance of a satellite.

It is the technical problem underlying the invention to provide a DC-DC converter which is capable of reducing or avoiding difficulties of the prior art mentioned above and is in particular capable of restricting an output current ripple.

The invention solves this problem by providing a DC-DC converter having the features of claim 1. Advantageous developments of the invention are mentioned in the dependent claims the wording of which is herewith incorporated into the description by reference.

According to the invention, the DC-DC converter includes a first transformer connected between a first node and a ground, the first node being located between an input terminal and an output terminal, and the first transformer comprising a first inductor and a second inductor magnetically coupled to each other, a first switch serially connected to the first inductor, between the first node and the ground, a second switch serially connected to the second inductor, between the first node and the ground, a third switch connected between a second node and the output terminal, the second node being located between the second inductor and the second switch, and the third switch being controlled in a same manner as the first switch, and a fourth switch connected between a third node and the output terminal, the third node being located between the first inductor and the first switch, and the fourth switch being controlled in a same manner as the second switch.

The DC-DC converter may further include a second transformer connected between the input terminal and the output terminal and including a third inductor and a fourth inductor magnetically coupled to each other, and a diode having an anode connected to the fourth inductor and a cathode connected to the output terminal.

The third inductor may be connected between the input terminal and the first node, and the fourth inductor may be connected between the first node and the diode.

When both of the first switch and the second switch are turned off, an output current may flow through the diode.

The first switch and the second switch may be alternately turned on, and when the first switch is turned on, the second switch may be turned off, and when the second switch is turned on, the first switch may be turned off.

The first switch and the second switch may be turned on at a same duty ratio, and the duty ratio may be less than about 50%.

A current may flow from the second node to the output terminal only when the third switch is turned on, and a current may flow from the third node to the output terminal only when the fourth switch is turned on.

The third switch may be a first thyristor having an anode connected to the second node and a cathode connected to the output terminal, and the fourth switch may be a second thyristor having an anode connected to the third node and a cathode connected to the output terminal.

The DC-DC converter may further include a controller outputting a first control signal to control the first thyristor and outputting a second control signal to control the second thyristor.

The first thyristor and the second switch may be controlled by the first control signal, and the second thyristor and the first switch may be controlled by the second control signal.

When the first switch is turned on, an induced current generated in the second inductor due to a current flowing into the first inductor may flow toward the output terminal via the third switch, and when the second switch is turned on, an induced current generated in the first inductor due to a current flowing into the second inductor may flow toward the output terminal via the fourth switch.

The third switch may be configured to be turned on when the first switch is turned on, and turned off when the first switch is turned off, and the fourth switch may be configured to be turned on when the second switch is turned on, and turned off when the second switch is turned off.

Advantageous embodiments of the invention are illustrated in the drawings. These and other embodiments of the invention are described in further detail in the following, taken in conjunction with the accompanying drawings in which:
FIG. 1 schematically illustrates a configuration of a DC-DC converter according to an embodiment;
FIG. 2 is an exemplary circuit diagram of a DC-DC converter, according to an embodiment;
FIGS. 3A to 3D exemplarily illustrate output current waveforms when a high output ripple current is generated, according to a comparative example; and
FIGS. 4A and 4B exemplarily illustrate output current waveforms of a DC-DC converter, according to an embodiment.

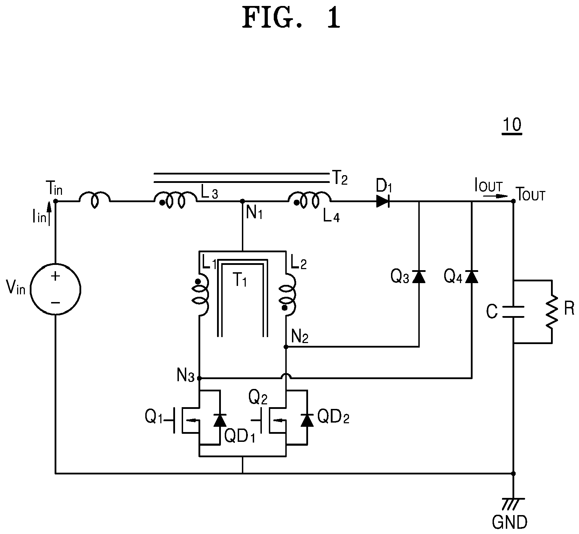

FIG. 1 schematically illustrates a configuration of a DC-DC converter 10 according to an embodiment. Referring to FIG. 1, the DC-DC converter 10 according to the present embodiment includes a first transformer T1 including a first inductor L1 and a second inductor L2, and first to fourth switches Q1, Q2, Q3, and Q4.

A first node N1 is connected between an input terminal Tin and an output terminal Tout. The first transformer T1 is connected between the first node N1 and to a ground GND. The first inductor L1 and the second inductor L2 of the first transformer T1 are magnetically coupled to each other. The first switch Q1 is serially connected to the first inductor L1 between the first node N1 and the ground GND. The second switch Q2 is serially connected to the second inductor L2 between the first node N1 and the ground GND. Diodes QD1 and QD2 may be respectively and anti-parallelly connected to the first switch Q1 and the second switch Q2.

Input power Vin is connected between the input terminal Tin and the ground GND, and the input power Vin may output an input current lin to the input terminal Tin. An output capacitor C for power stability is connected between the output terminal Tout and the ground GND. Furthermore, a load R is connected between the output terminal Tout and the ground GND, and an output current lout is supplied to the load R via the output terminal Tout. When a relatively large output current ripple occurs in the output current lout, the capacity of the output capacitor C needs to be large.

A second node N2 is connected between the second inductor L2 and the second switch Q2. The third switch Q3 is connected between the second node N2 and the output terminal Tout. A third node N3 is connected between the first inductor L1 and the first switch Q1. The fourth switch Q4 is connected between the third node N3 and the output terminal Tout.

The third switch Q3 is controlled in the same manner as the first switch Q1, and the fourth switch Q4 is controlled in the same manner as the second switch Q2. For example, the third switch Q3 may be configured to be turned on when the first switch Q1 is turned on, and to be tuned off when the first switch Q1 is turned off. The fourth switch Q4 may be configured to be turned on when the second switch Q2 is turned on, and to be turned off when the second switch Q2 is turned off.

When the third switch Q3 is turned on, a current may flow only from the second node N2 to the output terminal Tout. In other words, even when the third switch Q3 is turned on, no current flows from the output terminal Tout to the second node N2. When the third switch Q3 is turned off, no current flows between the second node N2 and the output terminal Tout.

When the fourth switch Q4 is turned on, a current may flow only from the third node N3 to the output terminal Tout. In other words, even when the fourth switch Q4 is turned on, no current flows from the output terminal Tout to the third node N3. When the fourth switch Q4 is turned off, no current flows between the third node N3 and the output terminal Tout.

The third switch Q3 and the fourth switch Q4 each may be provided as a thyristor. As illustrated in FIG. 1, the third switch Q3 may be a first thyristor having an anode connected to the second node N2 and a cathode connected to the output terminal Tout. The fourth switch Q4 may be a second thyristor having an anode connected to the third node N3 and a cathode connected to the output terminal Tout. In another example, the third switch Q3 and the fourth switch Q4 may be formed by a diode and a switching device that are serially connected to each other.

The first and second switches Q1 and Q2 each perform a switching operation according to a switch control signal, and may alternately repeat turning on and off. The first and second switches Q1 and Q2 are not turned on by the switch control signal at the same time. For example, when the second switch Q2 is turned off by the switch control signal, the first switch Q1 is turned on. Furthermore, when the first switch Q1 is turned off, the second switch Q2 is turned on. The first and second switches Q1 and Q2 may not be turned off at the same time.

The first switch Q1 and the second switch Q2 may be turned on at the same duty ratio. In this state, the duty ratio may be about less than 50%. In an example, the duty ratio may be about 40%. The duty ratio may vary according to a voltage level of the input power Vin and a voltage level of a desired output voltage.

When the first switch Q1 is turned on by the switch control signal, an induced current is generated in the second inductor L2 by a current flowing into the first inductor L1, and the induced current flows toward the output terminal Tout via the third switch Q3. Likewise, when the second switch Q2 is turned on by the switch control signal, an induced current is generated in the first inductor L1 by the current flowing into the second inductor L2, and the induced current flows toward the output terminal Tout via the fourth switch Q4.

The DC-DC converter 10 according to the present embodiment may further include a third inductor L3 and a fourth inductor L4, which are serially connected between the input terminal Tin and the output terminal Tout, and a diode D1 serially connected to the fourth inductor L4. The third and fourth inductor L3 and L4, as illustrated in FIG. 1, are magnetically connected to each other, and may form a second transformer T2. Accordingly, an induced current is generated in the fourth inductor L4 by the current flowing into the third inductor L3.

As illustrated in FIG. 1, the third inductor L3 may be connected between the input terminal Tin and the first node N1, and the fourth inductor L4 may be connected between the first node N1 and the diode D1. The diode D1 may have an anode connected to the fourth inductor L4 and a cathode connected to the output terminal Tout.

The third and fourth inductor L3 and L4 and the diode D1 form a current path between the input terminal Tin and the output terminal Tout. When both of the first and second switches Q1 and Q2 are turned off by the switch control signal, the current flows toward the output terminal Tout via the diode D1. In this state, since both of the third and fourth switches Q3 and Q4 are turned off, no current flows through the first and second inductors L1 and L2.

Accordingly, the DC-DC converter 10 according to the present embodiment allows the current to flow toward the output terminal Tout via the third and fourth switches Q3 and Q4 when the first and second switches Q1 and Q2 are alternately turned on, and to flow toward the output terminal Tout via the diode D1 when both of the first and second switches Q1 and Q2 are turned off, and thus the output terminal Tout may continuously output a current with a reduced output current ripple.

According to a comparative example, a diode, instead of the third switch Q3, is connected between the second node N2 and the output terminal Tout, and a diode, instead of the fourth switch Q4, may be connected between the third node N3 and the output terminal Tout. For convenience of explanation, according to the comparative example, the diode connected between the second node N2 and the output terminal Tout is referred to as a third diode D3 (not shown), and the diode connected between the third node N3 and the output terminal Tout is referred to as a fourth diode D4 (not shown).

When the first switch Q1 is turned off by the switch control signal, the current flowing through the first inductor L1 flows toward the output terminal Tout via the fourth diode D4. The first inductor L1 and the second inductor L2 are magnetically coupled to each other, forming the first transformer T1, and an induced current corresponding to the current flowing through the first inductor L1 flows through the second inductor L2. The current flowing through the second inductor L2 flows toward the output terminal Tout via the third diode D3. When the first switch Q1 is turned off, the current flowing through the third diode D3 and the current flowing through the fourth diode D4 are summed at the output terminal Tout and a large output current ripple is generated.

As such, to prevent generation of a large output current ripple, in the DC-DC converter 10 according to the present embodiment, the third switch Q3 is controlled in the same manner as the first switch Q1, and the fourth switch Q4 is controlled in the same manner as the second switch Q2. In other words, when the first switch Q1 is turned on, the third switch Q3 is also turned on, and when the first switch Q1 is turned off, the third switch Q3 is also turned off. Furthermore, when the second switch Q2 is turned on, the fourth switch Q4 is also turned on, and when the second switch Q2 is turned off, the fourth switch Q4 is also turned off.

According to an embodiment, as illustrated in FIG. 1, the third and fourth switches Q3 and Q4 may be respectively first and second thyristors. In this state, the DC-DC converter 10 may further include a controller (not shown) for outputting a first control signal to control the first thyristor and a second control signal to control the second thyristor.

In an example, since the third switch Q3 is controlled in the same manner as the first switch Q1, the first switch Q1 may be controlled by the first control signal. Also, since the fourth switch Q4 is controlled in the same manner as the second switch Q2, the second switch Q2 may be controlled by the second control signal. In other words, the first and second control signals may be the above-described switch control signals.

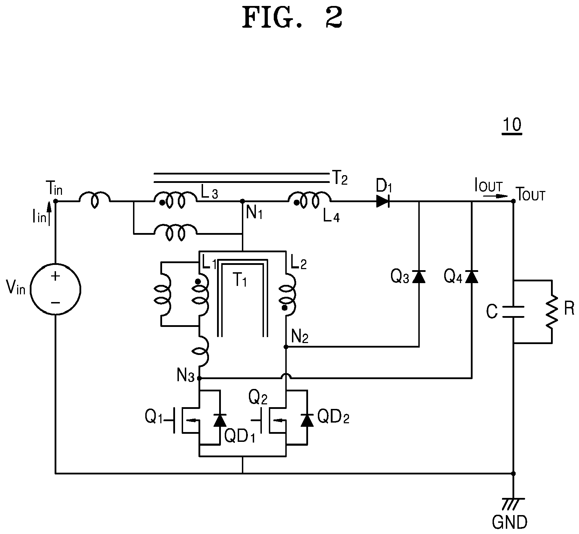

FIG. 2 is an exemplary circuit diagram of a DC-DC converter according to an embodiment. The circuit diagram of the DC-DC converter 10 of FIG. 2 shows that additional devices are further included compared to FIG. 1. For example, FIG. 2 illustrates that additional inductors are further connected to the first inductor L1 of the first transformer T1. The additional inductors may be serially/parallelly connected to the first inductor L1. Furthermore, FIG. 2 illustrates that additional inductors are further connected to the third inductor L3 of the second transformer T2. The additional inductors may be serially/parallelly connected to the third inductor L3.

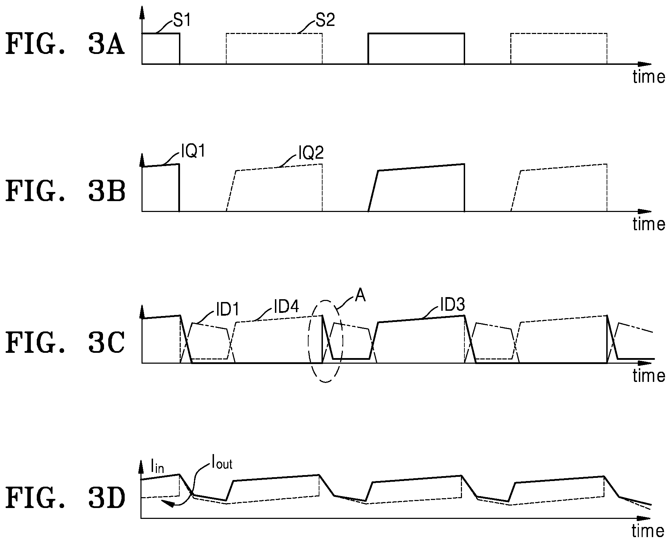

FIGS. 3A to 3D exemplarily illustrate waveforms when an output current ripple is generated, according to a comparative example. As described above, the comparative example of FIG. 3 is an example in which, in the circuit diagram of FIG. 1, the third diode D3, instead of the third switch Q3, is connected between the second node N2 and the output terminal Tout, and the fourth diode D4, instead of the fourth switch Q4, is connected between the third node N3 and the output terminal Tout.

FIG. 3A illustrates a control signal S1 applied to the first switch Q1 and a control signal S2 applied to the second switch Q2. Both of the first and second switches Q1 and Q2 are turned on at a duty ratio of about less than 50%. The first and second switches Q1 and Q2 may have the same duty ratio.

FIG. 3B illustrates a current IQ1 flowing through the first switch Q1 and a current IQ2 flowing through the second switch Q2.

FIG. 3C illustrates a current ID1 flowing through first the diode D1, a current ID3 flowing through the third diode D3 between the second node N2 and the output terminal Tout, and a current ID4 flowing through the fourth diode D4 between the third node N3 and the output terminal Tout.

A portion "A" of FIG. 3C shows a moment directly after the second switch Q2 is turned off. When the second switch Q2 is turned on, the first switch Q1 is turned off, and the current flowing through the second inductor L2 flows to the ground GND via the second switch Q2. The first transformer T1 allows an induced current to flow in the first inductor L1 by the current flowing through the second inductor L2, and the induced current flows through the fourth diode D4.

When the second switch Q2 is turned off, the induced current flowing through the fourth diode D4 gradually decreases. However, since the current flowing through the second inductor L2 does not flow through the second switch Q2, the current flows toward the output terminal Tout via the third diode D3. Accordingly, a sharp spike is generated in a current ID3 flowing through the third diode D3, as indicated by the portion "A". When the second switch Q2 is turned off, a spike current having the same amount as the current ID4 flowing through the fourth diode D4 instantly flows through the third diode D3.

FIG. 3D illustrates the input current lin input through the input terminal Tin and the output current lout output through the output terminal Tout. Due to the spike current instantly flowing through the fourth diode D4 when the first switch Q1 is turned off and the spike current flowing through the third diode D3 when the second switch Q2 is turned off, a large output current ripple is periodically generated in the output current lout.

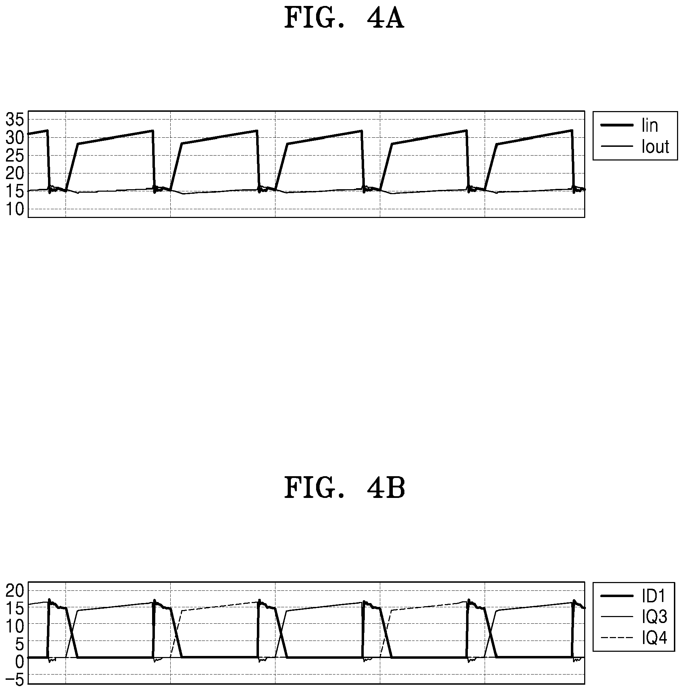

FIGS. 4A and 4B exemplarily illustrate output current waveforms of a DC-DC converter according to an embodiment. FIG. 4A illustrates the input current lin input through the input terminal Tin and the output current lout output through the output terminal Tout. FIG. 4B illustrates a current IQ3 flowing through the third switch Q3, a current IQ4 flowing through the fourth switch Q4, and a current ID1 flowing through the diode D1.

First, referring to FIG. 4B, in a section in which both of the first switch Q1 and the second switch Q2 are turned off, a current flows through the diode D1 only and the spike current as illustrated in FIG. 3C is not generated. Accordingly, as illustrated in FIG. 4A, an output current ripple is hardly generated in the output current lout.

As a result, according to the DC-DC converter 10 according to the present embodiment, since the output current ripple is much reduced, there is no need to use the output capacitor C having a large capacity in FIG. 1, and thus a problem that the life of the output capacitor C is abnormally decreased may not occur.

According to the DC-DC converter 10 according to the present embodiment, since the capacity of the output capacitor C may be reduced, the weight of an artificial satellite may be further reduced. Furthermore, when the output capacitor C is damaged, power may not be supplied to internal devices of the artificial satellite. Accordingly, by applying the DC-DC converter 10 according to the present embodiment, the expected life of the artificial satellite may be extended.

As described above, the present disclosure may provide a non-isolated DC-DC converter which may restrict an output current ripple.

It should be understood that embodiments described herein should be considered in a descriptive sense only and not for purposes of limitation. Descriptions of features or aspects within each embodiment should typically be considered as available for other similar features or aspects in other embodiments.

While one or more embodiments have been described with reference to the figures, it will be understood by those of ordinary skill in the art that various changes in form and details may be made therein without departing from the spirit and scope as defined by the following claims.

## Claims

1. A DC-DC converter comprising:
a first transformer (T1) connected between a first node (N1) and a ground (GND), the first node being located between an input terminal (Tin) and an output terminal (Tout), and the first transformer comprising a first inductor (L1) and a second inductor (L2) magnetically coupled to each other;
a first switch (Q1) serially connected to the first inductor, between the first node and the ground;
a second switch (Q2) serially connected to the second inductor, between the first node and the ground;
a third switch (Q3) connected between a second node (N2) and the output terminal, the second node being located between the second inductor and the second switch, and the third switch being controlled in a same manner as the first switch; and
a fourth switch (Q4) connected between a third node (N3) and the output terminal, the third node being located between the first inductor and the first switch, and the fourth switch being controlled in a same manner as the second switch.

2. The DC-DC converter of claim 1, further comprising:
a second transformer (T2) connected between the input terminal and the output terminal and comprising a third inductor (L3) and a fourth inductor (L4) magnetically coupled to each other; and
a diode (D1) having an anode connected to the fourth inductor and a cathode connected to the output terminal.

3. The DC-DC converter of claim 2, wherein the third inductor is connected between the input terminal and the first node, and the fourth inductor is connected between the first node and the diode.

4. The DC-DC converter of claim 2 or 3, wherein the DC-DC converter is configures such that, when both of the first switch and the second switch are turned off, an output current flows through the diode.

5. The DC-DC converter of any one of claims 1 to 4, wherein DC-DC converter is configured such that the first switch and the second switch are alternately turned on, and when the first switch is turned on, the second switch is turned off, and when the second switch is turned on, the first switch is turned off.

6. The DC-DC converter of any one of claims 1 to 5, wherein the DC-DC converter is configured such that the first switch and the second switch are turned on at a same duty ratio, and the duty ratio is less than about 50%.

7. The DC-DC converter of any one of claims 1 to 6, wherein the DC-DC converter is configured such that a current flows from the second node to the output terminal only when the third switch is turned on, and
a current flows from the third node to the output terminal only when the fourth switch is turned on.

8. The DC-DC converter of any one of claims 1 to 7, wherein the third switch is a first thyristor having an anode connected to the second node and a cathode connected to the output terminal, and the fourth switch is a second thyristor having an anode connected to the third node and a cathode connected to the output terminal.

9. The DC-DC converter of claim 8, further comprising a controller outputting a first control signal to control the first thyristor and outputting a second control signal to control the second thyristor.

10. The DC-DC converter of claim 9, wherein the first thyristor and the second switch are controlled by the first control signal, and the second thyristor and the first switch are controlled by the second control signal.

11. The DC-DC converter of any one of claims 1 to 10, wherein, when the first switch is turned on, an induced current generated in the second inductor due to a current flowing into the first inductor flows toward the output terminal via the third switch, and, when the second switch is turned on, an induced current generated in the first inductor due to a current flowing into the second inductor flows toward the output terminal via the fourth switch.

12. The DC-DC converter of any one of claims 1 to 11, wherein the third switch is configured to be turned on when the first switch is turned on, and turned off when the first switch is turned off, and the fourth switch is configured to be turned on when the second switch is turned on, and turned off when the second switch is turned off.
